# EUROPÄISCHE PATENTSCHRIFT

(11) **EP 1 251 038 B1**
(45) Veröffentlichungstag und Bekanntmachung des Hinweises auf die Patenterteilung: **11.05.2005**
(21) Anmeldenummer: 02008542.9
(22) Anmeldetag: 16.04.2002
(51) Int. Cl.: B60R 19/26, B62D 21/15, B60R 19/38, B60R 19/34

(54) **Frontmodul mit Montageträger für ein Kraftfahrzeug**
Front module with mounting carrier for a vehicle
Bloc avant avec support d'assemblage pour un véhicule

(30) Priorität: 19.04.2001 DE 10119114
(43) Veröffentlichungstag der Anmeldung: 23.10.2002
(73) Patentinhaber: Hella-Behr Fahrzeugsysteme GmbH, 59552 Lippstadt (DE)
(72) Erfinder: Kersting, Dirk, 59555 Lippstadt (DE); Kamphues, Jochen, 33014 Bad Driburg (DE); Schmidt, Ralf, 59302 Oelde (DE)
(74) Vertreter: Elbertzhagen, Otto, Dipl.-Ing.

(56) Entgegenhaltungen:
- WO-A-00/03895
- DE-A- 19 953 808
- DE-C- 19 611 934

## Beschreibung

Die Erfindung bezieht sich auf ein Frontmodul zur Anbringung an den Längsträgern der Karosserie eines Kraftfahrzeuges mit einem als Aufprallträger ausgebildeten Querträger, der jeweils unter Zwischenfügung einer Crashbox an jedem der Karosserie-Längsträger befestigbar ist, wobei die Crashboxen einerseits mit dem Querträger fest verbunden und andererseits mittels rückwärtiger Flanschplatten mit den Stirnenden der Fahrzeug-Längsträger verschraubbar sind, und ferner mit einem an den Crashboxen befestigten Montageträger, an dem diejenigen Bauteile des Frontmoduls, die unter Einhaltung eines bestimmten Fugenmaßes zu den Karosserieteilen auszurichten sind, angeordnet sind.

Ein Frontmodul dieser Art ist aus dem Dokument WO 00/03895 A1 bekannt, um den Montageträger gegenüber der Fahrzeugkarosserie nicht nur in der Fahrzeugquerebene, der Y-Z-Ebene, sondern auch in der Fahrzeuglängsrichtung, der X-Richtung, verstellen zu können. Für die Justage in der X-Richtung werden hierbei Crashboxen vorgesehen, die aus zwei relativ zueinander in der X-Richtung verstellbaren Teilen bestehen. An den vorderen Teilen der Crashboxen, welche den Stoßfänger-Querträger tragen, ist der Montageträger befestigt. Zur verstellbaren Verbindung der Crashboxenteile sind durch Langlöchern hindurchgeführte Schrauben vorgesehen, über die nach passender Justierung des Montageträgers in Fahrzeuglängsrichtung die Crashboxenteile fest miteinander verspannt werden. Zudem kann noch eine Verschiebung derCrashboxen mitsamt dem Montageträger in der Fahrzeugquerebene vorgenommen werden, dazu ist eine entsprechend mit Langlöchern ausgebildete Flanschverbindung zwischen den rückwärtigen Crashboxenteilen und den Fahrzeuglängsträgern vorgesehen. Im Crashfall werden die auf die Crashboxen einwirkenden Kräfte über die Justierglieder für die Längsausrichtung des Montageträgers auf die Karosserie-Längsträger übertragen.

Das Dokument DE 198 47 389 A1 beschreibt eine Befestigung eines Frontmoduls an einer Fahrzeugkarosserie, bei der ebenfalls die Einstellglieder an der Verbindungsstelle zwischen den Karosserie-Längsträgern und den Crashboxen vorgesehen sind. So erfolgt auch hier im Crashfall die Kraftübertragung über die Justierelemente zwischen den Crashboxen und den Karosserie-Längsträgern.

Das nachveröffentlichte Dokument DE 199 53 808 A1 beschreibt ein Frontmodul für ein Kraftfahrzeug, das in seiner Gesamtheit mit den Fahrzeug-Längsträgern und unter Zwischenfügen von Crashboxen mit den karosserieseitigen Radhäusern verbunden wird. Die Crashboxen sind mehrteilig ausgeführt und weisen Boxenabschnitte mit in Fahrzeuglängsrichtung ausgerichteten Langlöchern auf, mit denen ein Toleranzausgleich des gesamten Frontmoduls möglich ist.

Aus dem Dokument DE 198 13 548 A1 ergibt sich eine andersartige Befestigung für ein Frontmodul an den Karosserie-Längsträgern. Dort wird das Frontmodul mitsamt den Crashboxen mit den Karosserie-Längsträgern verschraubt. Das Frontmodul weist eine Quertraverse auf, die relativ zu karosserieseitigen Seitenwänden des Fahrzeugvorderbaus justiert werden kann, wozu im Bereich dieser Seitenwände Verbindungsplatten vorgesehen sind, an denen mehrere Verschraubungsmöglichkeiten bestehen.

Aus dem Dokument EP 0 519 776 B1 ist ein ebenfalls andersartiges Frontmodul bekannt. Der Stoßfänger-Querträger ist hierbei von dem Montageträger dadurch entkoppelt, daß er in Längsrichtung des Fahrzeugs bzw. der Fahrzeuglängsträger, also in der sogenannten X-Richtung, gegenüber dem Montageträger verschieblich ist. Die Justierung des Montageträgers in der X-Richtung erfolgt über eine separate Stellvorrichtung, die sich in Abstand von den Crashboxen und den Karosserie-Längsträgern an einem geeigneten Karosserieteil befindet.

Die bekannten Konstruktionen lösen nicht sämtliche Probleme, die sich hinsichtlich einer exakten Ausrichtung des Montageträgers des Frontmoduls relativ zu den Karosserieteilen ergeben. Bei den Montageträgern in neuerer Ausführung handelt es sich um Kunststoffteile oder Verbundteile aus Metall und Kunststoff, hingegen sind der für die Übertragung einer Aufprallenergie ausgebildete Querträger des Frontmoduls und die Crashboxen als Schweißkonstruktion ausgeführt, für die größere Toleranzen vorgesehen werden müssen. Des weiteren ist sowohl für die Erstmontage als auch für den Reparaturfall eine gute Werkzeugzugänglichkeit erforderlich. All diese Kriterien haben bei den bekannten Anordnungen zu relativ aufwendigen, teuren Konstruktionen geführt. Vor allem werden bei denjenigen Ausführungen, bei denen das Frontmodul justierbar ist, die im Crashfall von den Crashboxen aufgenommenen Kräfte über diejenigen Verbindungsstellen in die Karosserie-Längsträger eingeleitet, die mit den Verstellgliedern versehen sind.

Der Erfindung liegt deshalb die Aufgabe zugrunde, ein Frontmodul der eingangs genannten Art zu schaffen, das montagefreundlicher und kostengünstiger ist und bei dem die Verbindungselemente, über welche die Justage des Frontmoduls zumindest in der Fahrzeuglängsrichtung vorgenommen wird, von einer Kraftübertragung im Crashfall entkoppelt sind.

Diese Aufgabe wird bei einem Frontmodul gemäß den Merkmalen des Oberbegriffs des Anspruchs 1 durch die kennzeichnenden Merkmale des Anspruchs 1 gelöst.

Für die Erfindung ist wesentlich, daß der Montageträger des Frontmoduls an Stellen lösbar verschraubt ist, die sich zum einen nahe an den Stirnenden der Karosserie-Längsträger befinden, die jedoch zum anderen an einer Kraftübertragung im Crashfall nicht beteiligt sind.

So gehen Toleranzen in der Schweißkonstruktion des als Aufprallträger ausgebildeten Querträgers und der damit festen Teile in geringerem Umfang in die einzuhaltenden Spaltmaße zwischen den Karosserieteilen und den Bauteilen am Montageträger ein. Weiter ist an den Crashboxen eine gute Werkzeugzugänglichkeit ohnehin erforderlich, weil in einem Reparaturfall nach einem Crash unter Deformation der Crashboxen deren Austausch erforderlich ist, weswegen auch ein leichter Zugang zu der Verschraubung des Montageträgers besteht.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: in perspektivischer Darstellung die tragenden Gestellteile eines Frontmoduls für ein Personenkraftfahrzeug,
- Fig. 2: eine vergrößerte perspektivische Teildarstellung der einen Verbindungsstelle des Montageträgers mit der betreffenden Crashbox des Modulgestells entsprechend Fig. 1,
- Fig. 3: eine der Fig. 1 entsprechende Darstellung, wobei jedoch der Montageträger von den Crashboxen des Modulgestells abgehoben wiedergegeben ist,
- Fig. 4: eine der Fig. 2 entsprechende Darstellung jedoch in der voneinander abgehobenen Position der Verbindungsteile des Montageträgers gemäß Fig. 3,
- Fig. 5: eine andere perspektivische Wiedergabe einer der Verbindungsstellen zwischen dem Montageträger und der Crashbox des Modulgestells und
- Fig. 6a-c: eine Ansicht der Verbindungsstelle gemäß Fig. 5 bei unterschiedlichen Positionen der Montageträger-Teile in der Fahrzeuglängsrichtung.

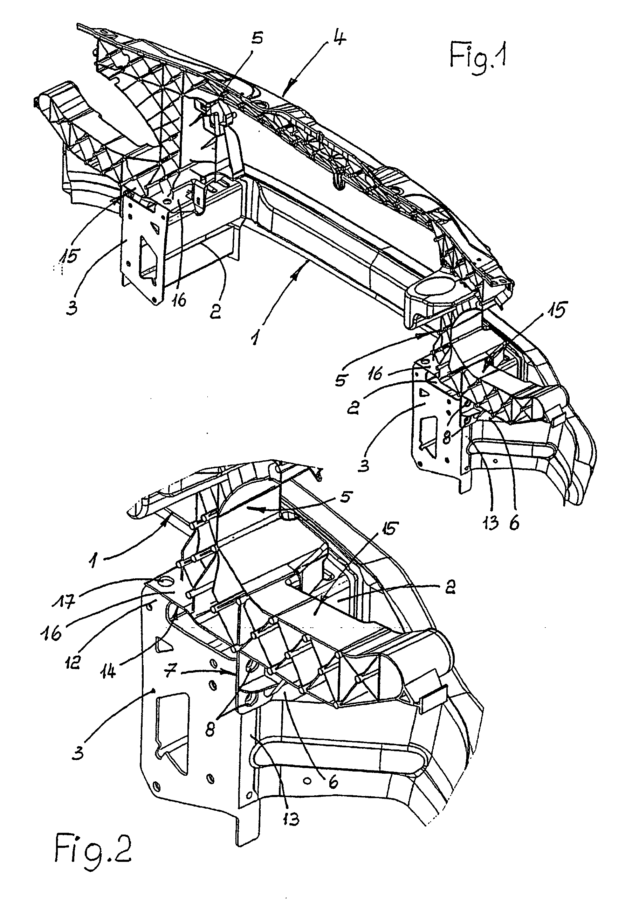

Im einzelnen zeigt Figur 1 die tragenden Elemente eines Frontmoduls für ein Personenkraftfahrzeug, zu denen ein als Aufprallträger ausgebildeter Querträger 1 gehört. Der Querträger 1 ist das wesentliche Teil des vorderen Fahrzeug-Stoßfängers und trägt in fertig montierter Anordnung die übliche Stoßfängerverkleidung. Der Querträger 1 wird an den bei dem Fahrzeug vorhandenen Längsträgern befestigt, und es werden zwischen den Stirnenden der Fahrzeuglängsträger und dem Querträger 1 Crashboxen 2 angeordnet, die mit dem Querträger 1 fest verbunden, insbesondere verschweißt sind und die mittels rückwärtiger Flanschplatten 3 mit den Stirnenden der Fahrzeuglängsträger verschraubt werden.

Da es sich bei dem Querträger 1 und den Crashboxen 2 um eine Schweißkonstruktion handelt, die eine größere Toleranzbreite benötigt, ordnet man die Anbauteile des Frontmoduls, insbesondere diejenigen, die unter Einhaltung eines bestimmten Fugenmaßes zu den Karosserieteilen auszurichten sind, an einem Montageträger 4 an, der im Bereich der rückwärtigen Flanschplatten 3 an die Crashboxen 2 ansetzbar ist. Der Hauptteil des Montageträgers 4 liegt in montierter Anordnung oberhalb des Querträgers 1 und erstreckt sich dazu etwa parallel. Nahe seinen beidseitigen Enden weist der Hauptteil des Montageträgers 4 nach unten gerichtete Stützelemente 5 auf, an denen sich nach außen vorstehende Fußelemente 15 befinden, mittels derer der Montageträger 4 auf die Crashboxen 2 aufsetzbar ist. An der Unterseite der Fußelemente 15 des Montageträgers 4 sind Konsolen 6 angeordnet, die der Verschraubung des Montageträgers 4 mit den Crashboxen 2 dienen.

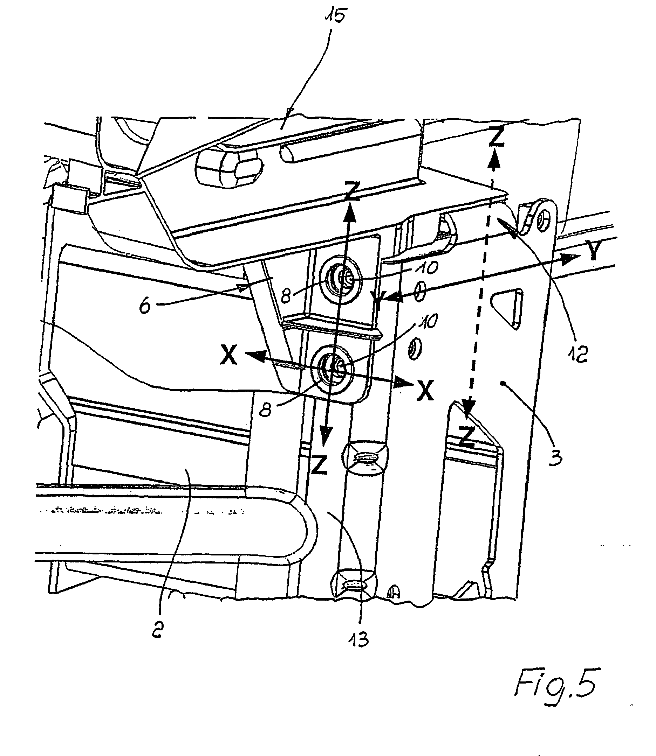

Wichtig ist, daß der Montageträger 4 bei seiner Verschraubung mit den Crashboxen 2 ausgerichtet werden kann. Dies gilt vor allem für die Ausrichtung in der Fahrzeuglängsrichtung, die in Fig. 5 durch die mit X bezeichneten Pfeile deutlich gemacht ist. Die Fahrzeughöhenrichtung ist durch die mit Z gekennzeichneten Pfeile angegeben, des weiteren ist durch die mit Y kennzeichneten Pfeile die Fahrzeugquerrichtung definiert.

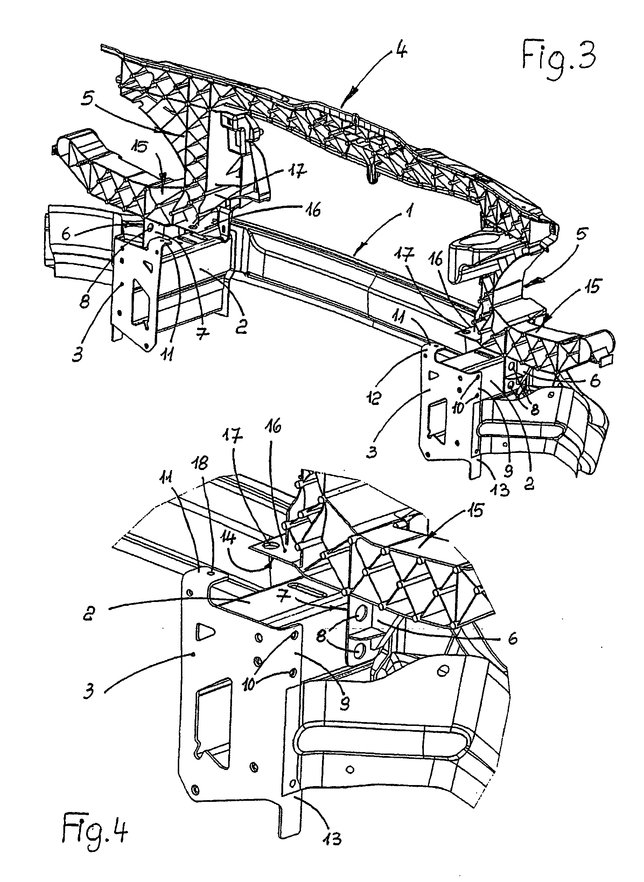

Die Konsolen 6 unterseitig an den Fußelementen 15 des Montageträgers 4 haben Flanschflächen 7 (Fig. 3 + 4), die in der X-Z-Ebene des Fahrzeugs sich erstrecken. Im Bereich dieser Flanschflächen 7 weisen die Konsolen 6 Durchgangslöcher 8 auf, die mit Schraubendurchgangslöchern 10 korrelieren, die sich an den Flanschplatten 3 der Crashboxen 2 befinden. Im Bereich der Schraubendurchgangslöcher 10 haben die Flanschplatten 3 der Crashboxen 2 ebenfalls eine in der X-Z-Ebene des Fahrzeugs liegende Flanschfläche 9, gegen die die Flanschfläche 7 der Konsolen 6 unterendig am Montageträger 4 verspannbar sind.

Die Figuren 3 und 4 veranschaulichen besonders gut die Anordnung der erwähnten Konsolen 6 an den Unterseiten 15 der Fußelemente 15 des Montageträgers 4. Auch erkennt man hier, daß sich die Flanschfläche 7 an den Konsolen 6 sowohl in der Vertikalrichtung Z als auch in der Fahrzeuglängsrichtung X erstreckt. Gleiches gilt für die Flanschfläche 9, die sich an der Außenseite einer seitlichen Abkantung 13 der Flanschplatten 3 befindet.

Die Flanschplatten 3 der Crashboxen 2 haben ferner im Bereich einer Oberkante eine Abwinklung 12, die nach vorn hin zur Seite der Crashboxen 2 gerichtet ist und sich zumindest im Endbereich in Horizontalrichtung erstreckt. Dadurch ist an den Flanschplatten 3 der Crashboxen 2 eine Stützfläche 11 gebildet, auf die der Montageträger 4 bei seiner Montage aufgesetzt werden kann. Entsprechend findet sich an der Unterseite der Fußelemente 15 des Montageträgers 4 eine Auflagerfläche 14 (Fig. 2 + 4), über die sich der Montageträger 4 auf der Stützfläche 11 der Montageplatten 3 an den Crashboxen 2 abstützt. Hierbei fluchten dann die Schraubendurchgangslöcher 8 im Bereich der Flanschflächen 7 der Konsolen 6 mit den Schraubenlöchern 10 im Bereich der seitlichen Flanschflächen 9 an den Flanschplatten 3.

Die Stützflächen 11 an den Montageplatten 3 und die Auflagerflächen 14 unterseitig am Montageträger 4 können in gleicher Weise Flanschflächen mit einer funktion sein, wie sie zuvor sowie nachstehend anhand der Flanschflächen 8 und 9 erörtert wird. Die Auflagerflächen 14 sind Teil eines jeweils an den Fußelementen 15 des Montageträgers ausgebildeten Auflagers 16, welches ein Schraubendurchgangsloch 17 aufweist. Dem entspricht ein Schraubendurchgangsloch 18 (Fig. 4) im Bereich der Stützfläche 11, die Teil der Flanschplatten 3 ist. Grundsätzlich ist an dieser Stelle eine weitere Schraubverbindung nicht erforderlich, dies richtet sich danach, ob eine zusätzliche Festigkeit bei der Verbindung des Montageträgers 4 mit den Crashboxen 2 erzielt werden muß.

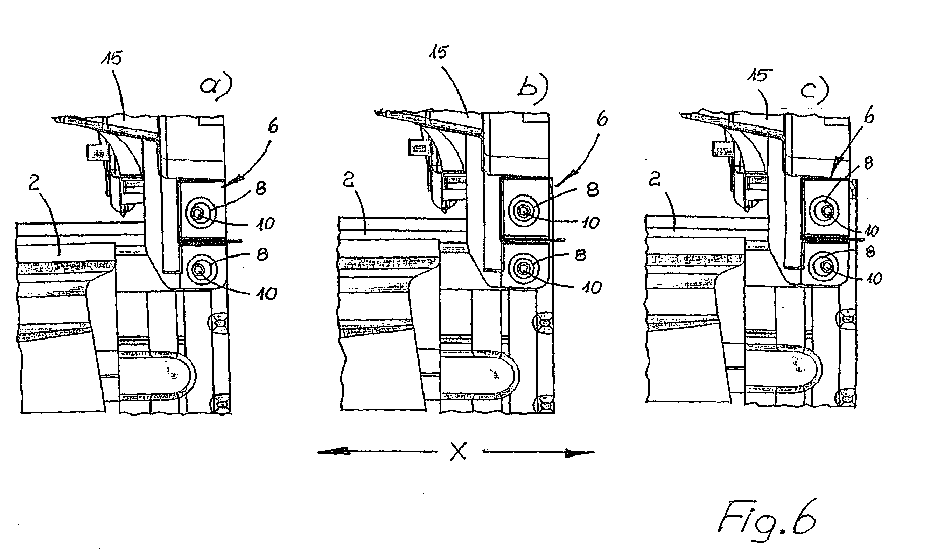

Figur 6 zeigt nun, daß die Schraubendurchgangslöcher 8 an den Flanschflächen 7 der Konsolen 6 einen größeren Durchmesser als die Schraubendurchgangslöcher 10 der Flanschflächen 9 an den Flanschplatten 3 der Crashboxen 2 haben. Der Durchmesser der Schraubenlöcher 10 an den Flanschplatten 3 entspricht den jeweils verwendeten Schrauben, die zur Verspannung der Flanschflächen 7 an den Konsolen 6 und der Flanschflächen 9 an den Flanschplatten 3 der Crashboxen 2 dienen. Beispielsweise kann es sich bei den Schraubenlöchern 10 an den Flanschplatten 3 um Gewindelöcher handeln, zum anderen kann hier die Gewindebohrung durch an den Abkantungen 13 der Flanschplatten 3 hinterschweißte Muttern gebildet sein. Weil der Schaftdurchmesser der Verbindungsschrauben kleiner als der Durchmesser der Schraubendurchgangslöcher 8 im Bereich der Flanschflächen 7 der Konsolen 6 ist, kann beispielsweise bei bereits eingesetzten Schrauben, die noch nicht angezogen sind, der Montageträger 4 relativ zu den Flanschplatten 3 an den Crashboxen 2 in Fahrzeuglängsrichtung, der X-Richtung, justiert werden. Figur 6a veranschaulicht eine Justage des Montageträgers 4 in rückwärtiger X-Richtung zur Fahrzeugrückseite hin, was man an der Exzentrizität der Schraubenlöcher 8 und 10 zueinander erkennt. Figur 6c zeigt die maximal in Frontrichtung des Fahrzeugs mögliche Justage des Montageträgers 4, während Figur 6b die zwischen den beiden genannten Endlagen mögliche Mittellage wiedergibt. Falls vorhanden, können die Schraubendurchgangslöcher 17 am Auflager 16 und der Auflagerfläche 14 des Montageträgers 4 und die Schraubendurchgangslöcher 18 an den Stützflächen 11 der Flanschplatten 3 an den Crahsboxen 2 in analoger Weise zusammenwirken. Hier haben dann die Schraubendurchgangslöcher 17 der Auflager 16 den größeren Durchmesser, um die Justage des Montageträgers 4 vor allem in X-Richtung zu ermöglichen.

Falls erforderlich kann grundsätzlich die Einstellung des Montageträgers in analoger Weise auch in der Z-Richtung, also der Höhenrichtung des Fahrzeugs (siehe Fig. 5), vorgenommen werden. Dies hängt jedoch davon ab, in welcher Reihenfolge die Gesamtmontage vorgenommen wird, wird der Montageträger 4 vormontiert, nimmt man zweckmäßig die Z-Einstellung an der Nahtstelle zwischen dem Montageträger 4 und den Flanschplatten 3 an der Crashbox 2 vor. Andernfalls ist aber auch die Einstellung in der Z-Richtung zwischen den Flanschplatten 3 der Crashboxen 2 und den Fahrzeuglängsträgern möglich, da die Hauptfläche der Flanschplatten 3 in der Y-Z-Ebene des Fahrzeugs liegt. Deshalb nimmt man die Justage in Fahrzeugquerrichtung, also in der Y-Richtung, zwischen den Flanschplatten 3 der Crashboxen 2 und den in der Zeichnung nicht dargestellten Stirnenden der Fahrzeuglängsträger vor.

## Patentansprüche

1. Frontmodul zur Anbringung an den Längsträgern der Karosserie eines Kraftfahrzeuges mit einem Querträger (1), Crashboxen (2) und einem Montageträger (4), wobei der Querträger (1) als Aufprallträger ausgebildet und jeweils unter Zwischenfügung einer der Crashboxen (2) an jedem der Karosserie-Längsträger befestigbar ist, wobei der Querträger (1) und die Crashboxen (2) Schweißkonstruktionen sind und die Crashboxen (2) einerseits mit dem Querträger (1) fest verbunden sowie andererseits mittels rückwärtiger Flanschplatten (3) mit den Stirnenden der Fahrzeug-Längsträger veschraubbar sind und wobei ferner an den Crashboxen (2) der Montageträger (4) befestigt ist, an dem diejenigen Bauteile des Frontmoduls, die unter Einhaltung eines bestimmten Fugenmaßes zu den Karosserieteilen auszurichten sind, angeordnet sind,
**dadurch gekennzeichnet,**
**daß** der Montageträger (4) an der rückwärtigen Flanschplatte (3) jeder Crashbox (2) lösbar angeschraubt ist und dazu am Montageträger (4) sowie an der Flanschplatte (3) jeder Crashbox (2) in Fahrzeuglängsrichtung liegende, gegeneinander verspannbare Flanschflächen (7, 9) mit Schraubendurchgangslöchern (8, 10) vorhanden sind, wobei die Schraubendurchgangslöcher (8) der zumindest einen der gegeneinander verspannbaren Flanschflächen (7,9) zumindest in Fahrzeuglängsrichtung relativ zum Schraubendurchmesser erweiterte Löcher sind.

2. Frontmodul nach Anspruch 1,
**dadurch gekennzeichnet,**
**daß** die Flanschflächen (7, 9) am Montageträger (4) und an den Crashboxen (2) eben sind.

3. Frontmodul nach Anspruch 1 oder 2,
**dadurch gekennzeichnet**,
da**ß** sich die Flanschflächen (7, 9) am Montageträger (4) und an den Crashboxen (2) in Vertikalrichtung und/oder Horizontalrichtung erstrecken und die Achsen der Schraubendurchgargslöcher (8, 10) entsprechend horizontal und/oder vertikal liegen.

4. Frontmodul nach Anspruch 1,
**dadurch gekennzeichnet,**
**daß** zusätzlich zu den Flanschflächen (9) Stützflächen (11) an den Crashboxen (2) vorhanden sind, die winklig zu den Flanschflächen (9) stehen und auf denen der Montageträger (4) aufsetzbar ist.

5. Frontmodul nach Anspruch 4,
**dadurch gekennzeichnet,**
**daß** die zusätzlichen Stützflächen (11) an den Crashboxen (2) horizontal liegend angeordnet sind.

6. Frontmodul nach Anspruch 4 oder 5,
**dadurch gekennzeichnet,**
**daß** die zusätzlichen Stützflächen (11) räumlich getrennt von den Flanschflächen (9) an den Crashboxen (2) angeordnet sind.

7. Frontmodul nach Anspruch 4 oder 5,
**dadurch gekennzeichnet,**
**daß** am Montageträger (4) Auflagerflächen (14) unterseitig angeordnet sind, mit denen der Montageträger (4) auf die Stützflächen (11) an den Crashboxen (2) aufsetzbar ist, wobei die Stützflächen (11) der Crashboxen (2) und die Auflagerflächen (14) des Montrageträgers (4) zugleich Flanschflächen entsprechend den Flanschflächen (7, 9) sind und zu den Schraubendurchgangslöchern (8, 10) entsprechende Schraubendurchgangslöcher (17, 18) haben.

8. Frontmodul nach einem der Ansprüche 1 bis 7,
**dadurch gekennzeichnet,**
**daß** die Crashboxen (2) eine Flanschplatte (3) zum Anschluß an den Stirnenden der Karosserie-Längsträger haben und an dieser Flanschplatte (3) eine Abkantung (13) angeordnet ist, an welcher die der Crashbox (2) zugehörige Flanschfläche (9) ausgebildet ist.

9. Frontmodul nach Anspruch 8,
**dadurch gekennzeichnet,**
**daß** die Abkantung (13) seitlich an der Flanschplatte (3) der Crashboxen (2) in vertikaler Richtung angeordnet und daran an der Außenseite die Flanschfläche (9) vertikal liegend ausgebildet ist.

10. Frontmodul nach Anspruch 8 oder 9,
**dadurch gekennzeichnet,**
**daß** die Flanschplatte (3) der Crashboxen (2) eine horizontale, oberseitige Abwinklung (12) hat, deren Oberseite die zusätzliche Stützfläche (11) zum Aufsetzen des Montageträgers (4) bildet.

11. Frontmodul nach einem der Ansprüche 8 - 10,
**dadurch gekennzeichnet,**
**daß** der Montageträger (4) eine unterseitige Auflagefläche (14) und unterendige Konsolen (6) hat, mittels derer er an die Flanschplatten (3) der Crashboxen (2) ansetzbar ist, wobei an den Konsolen (6) die jeweilige Flanschfläche (7) zum Verschrauben mit der Flanschfläche (9) an den Flanschplatten (3) der Crashboxen (2) angeordnet ist.

## Claims

1. Front module for attachment to the longitudinal chassis members of the body of a motor vehicle with a transverse support (1), crash boxes (2) and an assembly support (4) wherein the transverse support (1) is designed as an impact support and can be fixed with the interposition of one of the crash boxes (2) on each of the longitudinal chassis members of the body wherein the transverse support (1) and the crash boxes (2) are welded structures and the crash boxes (2) on one side are fixedly connected to the transverse support (1) and on the other side can be bolted to the side ends of the vehicle longitudinal chassis members by means of flange plates (3) at the back and wherein furthermore the assembly support (4) is fixed on the crash boxes (2), the assembly support being fitted with those component parts of the front module which are to be aligned relative to the body parts whilst observing a certain measured gap,
**characterised in that**
the assembly support (4) is detachably screwed onto the rear flange plate (3) of each crash box (2) and for this the assembly support (4) as well as the flange plate (3) of each crash box (2) are provided with mutually tensioned flange faces (7, 9) lying in the longitudinal direction of the vehicle and having screw holes (8, 10) wherein these screw holes (8) of the at least one of the mutually tensioned flange faces (7, 9) are holes which are widened out relative to the screw diameter at least in the longitudinal direction of the vehicle.

2. Front module according to claim 1,
**characterised in that**,
the flange faces (7, 9) on the assembly support (4) and on the crash boxes (2) are flat.

3. Front module according to claim 1 or 2,
**characterised in that**,
the flange faces (7, 9) on the assembly support (4) and on the crash boxes (2) extend in the vertical direction and/or in the horizontal direction and the axes of the screw holes (8, 10) lie correspondingly horizontal and/or vertical.

4. Front module according to claim 1,
**characterised in that**,
in addition to the flange faces (9) supporting faces (11) are provided on the crash boxes (2) which stand at an angle to the flange faces (9) and on which the assembly support (4) can be fitted.

5. Front module according to claim 4,
**characterised in that**,
the additional supporting faces (11) are arranged to lie horizontal on the crash boxes (2).

6. Front module according to claim 4 or 5,
**characterised in that**,
the additional supporting faces (11) are arranged spatially separate from the flange faces (9) on the crash boxes (2).

7. Front module according to claim 4 or 5,
**characterised in that**,
on the assembly support (4) there are contact bearing faces (14) on the underneath with which the assembly support (4) can be set on the supporting faces (11) on the crash boxes (2), whereby the supporting faces (11) of the crash boxes (2) and the bearing faces (14) of the assembly support (4) are at the same time flange faces corresponding to the flange faces (7, 9) and have screw holes (17, 18) corresponding to the screw holes (8, 10).

8. Front module according to one of claims 1 to 7,
**characterised in that**,
the crash boxes (2) have a flange plate (3) for connecting to the end sides of the longitudinal chassis members of the body and on this flange plate (3) there is an angled edge (13) on which is formed the flange face (9) which belongs to the crash box (2).

9. Front module according to claim 8,
**characterised in that**,
the angled edge (13) is arranged at the side in the vertical direction on the flange plate (3) of the crash boxes (2) and the flange face (9) is formed vertically aligned on the outside thereof.

10. Front module according to claim 8 or 9,
**characterised in that**,
the flange plate (3) of the crash boxes (2) has a horizontal angled area (12) at the top whose top side forms the additional supporting face (11) for mounting the assembly support (4).

11. Front module according to one of claims 8 - 10,
**characterised in that**, the assembly support (4) has a contact bearing face (14) on the underneath and a console bracket (6) at the lower end by means of which it can be placed against the flange plates (3) of the crash boxes (2) whereby the relevant flange face (7) is arranged on the console bracket (6) for screwing on the flange face (9) on the flange plates (3) of the crash boxes (2).

## Revendications

1. Bloc avant pour le montage sur les longerons de la carrosserie d'un véhicule automobile, avec une traverse (1), des structures antichoc (2) et un support d'assemblage (4), ladite traverse (1) étant conçue en tant que profilé de renforcement et pouvant être fixée à chacun des longerons de la carrosserie, lors de l'interposition de l'une des structures antichoc (2), ladite traverse (1) et les structures antichoc (2) étant des constructions soudées et les structures antichoc (2) pouvant être fixées, d'une part, à la traverse (1), au moyen de vis, ainsi que, d'autre part, aux extrémités frontales du longerons du véhicule automobile, au moyen de flasques arrière (3), et, en outre, le support d'assemblage (4) étant fixé aux structures antichoc (2), les composants du bloc avant devant être agencés en conservant une dimension de joint déterminée par rapport au éléments de la carrosserie, et étant disposés sur le support d'assemblage (4),
**caractérisé en ce que**
le support d'assemblage (4) est vissé, de manière amovible, au flasque arrière (3) de chaque structure antichoc (2) et que, pour ce faire, le support d'assemblage (4) ainsi que le flasque (3) de chaque structure antichoc (2), sont équipés de flancs (7, 9) qui, disposés dans le sens longitudinal du véhicule automobile, sont précontraints par rapport les uns aux autres et présentes de trous de passage de vis (8, 10), les trous de passage de vis (8) d'au moins l'un des flancs précontraints par rapport l'un à l'autre (7, 9) étant des trous élargis par rapport au diamètre des vis, au moins dans le sens de la longueur du véhicule automobile.

2. Bloc avant selon la revendication 1,
**caractérisé en ce que**
les flancs (7, 9) sont plans au support d'assemblage (4) et aux structures antichoc (2).

3. Bloc avant selon la revendication 1,
**caractérisé en ce que**
les flancs (7, 9) s'étendent verticalement et / ou horizontalement au support d'assemblage (4) et aux structures antichoc (2), et que les axes des trous de passage de vis (8, 10) sont adéquatement orientés horizontalement et / ou verticalement.

4. Bloc avant selon la revendication 1,
**caractérisé en ce que**,
sur les structures antichoc (2), en plus des flancs (9), sont prévues des surfaces de support (11) qui forment un angle avec les flancs (9), et sur lesquelles le support d'assemblage (4) peut être posé.

5. Bloc avant selon la revendication 4,
**caractérisé en ce que**
les surfaces de support supplémentaires (11) sont disposées horizontalement sur les structures antichoc (2).

6. Bloc avant selon la revendication 4 ou 5,
**caractérisé en ce que**
les surfaces de support supplémentaires (11) sont disposées sur les structures antichoc (2), à distance des flancs (9).

7. Bloc avant selon la revendication 4 ou 5,
**caractérisé en ce que**
le support d'assemblage (4) présente des surfaces d'appui (14), disposées sur sa face inférieure, avec lesquelles ledit support d'assemblage (4) peut être posé sur les surfaces de support (11) des structures antichoc (2), lesdites surfaces de support (11) des structures antichoc (2) et les surfaces d'appui (14) du support d'assemblage (4) étant simultanément des flancs qui correspondent aux flancs (7, 9) et sont pourvus de trous de passage de vis (17, 18) qui correspondent aux trous de passage (8, 10).

8. Bloc avant selon la revendication 1,
**caractérisé en ce que**
les structures antichoc (2) sont pourvues d'un flasque (3) pour le raccordement aux extrémités frontales des longerons de la carrosserie, et **en ce que** ce flasque (3) est pourvu d'une pièce pliée (13) à laquelle est formé le flanc (9) associé à la structure antichoc (2).

9. Bloc avant selon la revendication 8,
**caractérisé en ce que**
la pièce pliée (13) est disposée, latéralement, sur le flasque (3) des structure antichoc (2), dans le sens vertical et que le flanc (9) y est formée, orienté verticalement, côté extérieur.

10. Bloc avant selon la revendication 8 ou 9,
**caractérisé en ce que**
le flasque (3) des structure antichoc (2) présente, en haut, une flexion horizontale (12) horizontale, dont la face supérieure forme la surface de support supplémentaire (1) pour la mise en place du support d'assemblage (4).

11. Bloc avant selon l'une des revendications 8 à 10,
**caractérisé en ce que**
le support d'assemblage (4) possède une surface d'appui inférieure (14) et des consoles (6) disposées sous les extrémités, au moyen desquelles il peut être réuni aux flasques (3) des structures antichoc (2), chaque flanc (7) étant respectivement agencé aux consoles 16 pour le vissage avec le flanc (9) des flasques (3) des structures antichoc (2).
